# EUROPEAN PATENT APPLICATION

(11) **EP 2 023 348 A1**
(43) Date of publication of application: **11.02.2009**
(21) Application number: 07743941.2
(22) Date of filing: 23.05.2007
(51) Int. Cl.: G11B 20/10, G06F 3/06, G06F 13/10, G06F 13/14, H04N 5/76

(54) **IMAGE RECORDING/REPRODUCING DEVICE**

(30) Priority: 29.05.2006 JP 2006147974
(71) Applicant: Panasonic Corporation, Kadoma-shi Osaka 571-8501 (JP)
(72) Inventor: HARAGUCHI, Takayuki, c/o Panasonic Corp., IPROC, Chuo-ku, Osaka-shi, Osaka 540-6207 (JP); OOKAWA, Kentarou, c/o Panasonic Corp., IPROC, Chuo-ku, Osaka-shi, Osaka 540-6207 (JP); TSUZUKI, Kazuhisa, c/o Panasonic Corp., IPROC, Chuo-ku, Osaka-shi, Osaka 540-6207 (JP)
(74) Representative: Pautex Schneider, Nicole Véronique
(86) International application number: PCT/JP2007/060507
(87) International publication number: WO 2007/138950

(57) **Abstract**

An image recording/reproducing device is provided which, when a removable recording unit is mounted, can continuously use the unit while keeping previously recorded images and can improve convenience. A recording device 16 is an image recording/reproducing device and an HDD is a removable recording unit. When an HDD is added, the recording device 16 determines a format status of the added HDD, and further determines whether an HDD operation status, such as Single operation or Mirror operation, corresponds with a device operation status of the recording device 16 or not. The HDD operation status corresponds to a unit operation status. The recording device 16 recognizes an added HDD which is in the recording-device-formatted state and whose HDD operation status corresponds with the device operation status, with the current HDD operation status. The recording device 16 recognizes an added HDD which is in the recording-device-formatted sate and whose HDD operation status is different from the device operation status, with the HDD operation status rewritten such that it corresponds with the device operation status.

## Description

### RELATED APPLICATIONS

This present application claims the benefit of Japanese Patent Applications No. 2006-147974 filed in Japan on May 29, 2006 , the subject matter of which is hereby incorporated herein by reference.

### TECHNICAL FIELD

The present invention relates to an image recording/reproducing device for recording an image from a surveillance camera or the like, and particularly to an image recording/reproducing device to which removable recording units, such as removable-type hard disk units, are mounted.

### BACKGROUND ART

Conventionally, an image recording/reproducing device is used to record, for example, a surveillance image taken by a surveillance camera. An image recording/reproducing device records an image on a recording medium such as an HDD, and reproduces and outputs the recorded image. Such an image recording device is disclosed, for example, in Japanese Patent Laid-Open Applications Nos. 2002-247515 and 2000-244870.

A device that records an image on a removable recording unit is also suggested as an image recording/reproducing device. A removable recording unit is a recording unit that can be removed from an image recording/reproducing device and can be carried. Typical examples of removable recording units include an HDD (hard disk drive) unit. Such an image recording device is disclosed, for example, in Japanese Patent Laid-Open Application No. 2005-123796.

Conventionally, when an HDD unit is mounted, the HDD is formatted first; then the operation starts and an image is recorded. Conventionally, the formatting is always performed before the operation, even on an HDD unit that has been formatted by another image recording/reproducing device of the same kind or type.

Two operation statuses, which are a Single operation and a Mirror operation, can be set in a case where an image recording/reproducing device has a plurality of HDD units. In Single operation, the plurality of HDD units record different images. Images can therefore be recorded to an amount corresponding to the total capacity of the HDD units. In Mirror operation, on the other hand, the same images are recorded on the plurality of HDD units, and this can improve the reliability.

In the conventional image recording/reproducing devices, however, there has been a problem of inconvenience due to being unable to continuously use one removable recording unit in a plurality of image recording/reproducing devices.

For example, suppose that a removable recording unit being in use is removed from an image recording/reproducing device before running out of free space and is then mounted to another image recording/reproducing device. With the conventional art, as already described, formatting is performed before the start of operation when a removable recording unit is mounted to an image recording/reproducing device. Consequently, in the above example, the removable recording unit will be formatted by the second image recording/reproducing device, so that images recorded at the first image recording/reproducing device will be erased. It is therefore impossible to continuously use the unit such that it records further images while keeping the images recorded at the first image recording/reproducing device.

For another example, suppose that a removable recording unit that has been used in Single operation in one image recording/reproducing device is to be used in Mirror operation in another image recording/reproducing device. In this case, the removable recording unit is formatted when mounted to the latter image recording/reproducing device, and then the operation status of the removable recording unit is set to the Mirror operation. As a result, it is impossible to continuously use the unit while keeping the images recorded in Single operation.

### DISCLOSURE OF THE INVENTION

### Problems to be solved by the invention

The invention is made in viewing the above-mentioned background and a purpose of the invention is to provide an image recording/reproducing device that can continuously use a removable recording unit keeping previously recorded images when the unit is mounted to the device.

### Means for solving the problems

An image recording/reproducing device of the invention comprises: a recording unit mount for mounting a plurality of removable recording units for recording an image; a device-operation-status setting section for setting a device operation status which is an operation status on the recording device side about which of a Single operation and a Mirror operation is to be applied to the plurality of removable recording units; amanagement information acquisition section for, when the removable recording unit is added to the recording unit mount, acquiring management information for managing a recording unit configuration from the added removable recording unit; a format determination section for determining whether the added removable recording unit is in a recording-device-formatted state or not with reference to format status information included in the management information; an operation status determination section for determining whether a unit operation status which is an operation status set in the added removable recording unit corresponds (or coincides) with the device operation status or not with reference to operation status information included in the management information; and a recording unit recognition section for performing a recognition process on the added removable recording unit in accordance with determination results from the format determination section and the operation status determination section, where the recording unit recognition section recognizes the added removable recording unit which is in the recording-device-formatted state and whose unit operation status corresponds with the device operation status, with the current unit operation status (left unchanged); and recognizes the added removable recording unit which is in the recording-device-formatted state and whose unit operation status is different from the device operation status, with the unit operation status rewritten by the recording unit recognition section such that the unit operation status corresponds with the device operation status.

Another aspect of the invention is a control method for an image recording/reproducing device having a recording unit mount for mounting a plurality of removable recording units for recording an image, and the control method comprises: setting a device operation status which is an operation status on the recording device side about which of a Single operation and a Mirror operation is to be applied to the plurality of removable recording units; acquiring, when the removable recording unit is added to the recording unit mount, management information for managing a recording unit configuration from the added removable recording unit; determining whether the added removable recording unit is in a recording-device-formatted state or not with reference to format status information included in the management information; determining whether a unit operation status which is an operation status set in the added removable recording unit corresponds with the device operation status or not with reference to operation status information included in the management information; and performing a recognition process on the added removable recording unit in accordance with determination results on the format status and the operation status, where the recognition process recognizes the added removable recording unit which is in the recording-device-formatted state and whose unit operation status corresponds with the device operation status, with the current unit operation status; and recognizes the added removable recording unit which is in the recording-device-formatted state and whose unit operation status is different from the device operation status, with the unit operation status rewritten such that the unit operation status corresponds with the device operation status.

Still another aspect of the invention is a control program executed in an image recording/reproducing device having a recording unit mount for mounting a plurality of removable recording units for recording an image, and the control program causes the image recording/reproducing device to execute the processes of: setting a device operation status which is an operation status on the recording device side about which of a Single operation and a Mirror operation is to be applied to the plurality of removable recording units; acquiring, when a removable recording unit is added to the recording unit mount, management information for managing a recording unit configuration from the added removable recording unit; determining whether the added removable recording unit is in a recording-device-formatted state or not with reference to format status information included in the management information; determiningwhether a unit operation status which is an operation status set in the added removable recording unit corresponds with the device operation status or not with reference to operation status information included in the management information; and performing a recognition process on the added removable recording unit in accordance with determination results on the format status and the operation status, where the recognition process recognizes the added removable recording unit which is in the recording-device-formatted state and whose unit operation status corresponds with the device operation status, with the current unit operation status left unchanged; and recognizes the added removable recording unit which is in the recording-device-formatted state and whose unit operation status is different from the device operation status, with the unit operation status rewritten such that the unit operation status corresponds with the device operation status.

### Advantages of the invention

In the invention, as described above, when a removable recording unit is added, a format status and unit operation status of the added removable recording unit are determined and the above-described recognition process is performed on the removable recording unit. By providing such a configuration, the invention allows continuous use of an added removable recording unit with previously recorded images kept and can improve convenience.

As described hereafter, other aspects of the invention exist. Thus, this summary of the invention is intended to provide a few aspects of the invention and is not intended to limit the scope of the invention described and claimed herein.

### BRIEF DESCRIPTION OF THE DRAWINGS

Fig. 1 is a block diagram of an image recording/reproducing device of an embodiment of the invention;
Fig. 2 shows a surveillance system equipped with the image recording/reproducing device;
Fig. 3 shows a structure of a file system of the image recording/reproducing device;
Fig. 4 is a flowchart showing an operation of the image recording/reproducing device;
Fig. 5 shows an example of an operation of the image recording/reproducing device;
Fig. 6 shows an example of an operation of the image recording/reproducing device; and
Fig. 7 shows an example of an operation of the image recording/reproducing device.

### DESCRIPTION OF THE SYMBOLS

- 1,2: HDD
- 10: Surveillance system
- 12: Camera
- 14: Hub
- 16: Recording device
- 18: Monitoring PC
- 20: NW controller
- 22: Signal processor
- 24: Encoder/decoder
- 26: Memory
- 28: Writer/reader
- 30: HDD mount
- 40: NW controller driver
- 42: File system
- 44: HDD controller driver
- 46: Operation section

### BEST MODE OF EMBODYING THE INVENTION

A detailed explanation of the invention will be hereinafter described. The detailed explanation and the accompanying drawings do not limit the invention. Instead, the scope of the invention is limited by claims attached hereto.

An image recording/reproducing device (or apparatus) of the invention comprises: a recording unit mount for mounting a plurality of removable recording units for recording an image thereon; a device-operation-status setting section for setting a device operation status (or apparatus operation status) which is an operation status on the recording-device-side about which of a Single operation and a Mirror operation is to be applied to the plurality of removable recording units; a management information acquisition section for, when the removable recording unit is added to the recording unit mount, acquiring management information for managing a recording unit configuration from the added removable recording unit; a format determination section for determining whether the added removable recording unit is in a recording-device-formatted state or not (i.e. whether recording-device-formatting has been performed on the added removable recording unit) with reference to format status information included in the management information; an operation status determination section for determining whether a unit operation status which is an operation status set in the added removable recording unit corresponds with the device operation status or not with reference to operation status information included in the management information; and a recording unit recognition section for performing a recognition process on the added removable recording unit in accordance with determination results from the format determination section and the operation status determination section, where the recording unit recognition section recognizes the added removable recording unit which is in the recording-device-formatted state (i.e. on which recording-device-formatting has been performed) and whose unit operation status corresponds with the device operation status, with the current unit operation status; and recognizes the added removable recording unit which is in the recording-device-formatted state and whose unit operation status is different from the device operation status, with the unit operation status rewritten such that the unit operation status corresponds with the device operation status.

In this configuration, when a removable recording unit is added, a format status and unit operation status of the added removable recording unit are determined. Then, if the added removable recording unit is in the recording-device-formatted state and its unit operation status corresponds with the device operation status, the added removable recording unit is recognized with the current unit operation status left unchanged. If the added removable recording unit is in the recording-device-formatted state and its unit operation status is different from the device operation status, the unit operation status is rewritten such that it corresponds with the device operation status, and the added removable recording unit is recognized. Consequently, a removable recording unit in the recording-device-formatted state can be used without being reformatted, and this allows the unit to be used continuously with previously recorded images kept. Even if the unit operation status and the device operation status are different from each other, the removable recording unit can be used after the unit operation status is rewritten, and this allows the removable recording unit to be used continuously with images recorded in previous operation status kept. For example, a removable recording unit in Single operation can be used continuously in Mirror operation, and vice versa. In this way, continuous use of a removable recording unit can be achieved, improving convenience.

The image recording/reproducing device of the invention is also configured such that, in a case where the device operation status is the Mirror operation and the recording unit mount is in a non-mounted state and when one removable recording unit which is in the recording-device-formatted state and whose unit operation status is the Single operation is mounted, the unit operation status of the added removable recording unit is rewritten to the Mirror operation, and then a Mirror One-Lung operation is performed. Mirror One-Lung operation (which may also be referred to as Mirror One-Side operation) means, when only one removable recording unit is mounted despite the operation status being set to the Mirror operation, recording images on the one mounted removable recording unit. This configuration allows further images to, be recorded on an added removable recording unit while images recorded on the removable recording unit during Single operation are kept. In addition, even when the normal Mirror operation cannot be performed due to an insufficient number of units because of there being only one removable recording unit, the Mirror One-Lung operation can suitably achieve image recording.

The image recording/reproducing device of the invention is also configured such that, when another removable recording unit which is in the recording-device-formatted state and whose unit operation status is the Single operation is mounted, the unit operation status of the added removable recording unit is rewritten to the Mirror operation, the operation is switched from the Mirror One-Lung operation to the Mirror operation, and Mirror restoration is performed. Mirror restoration means, when a removable recording unit is added during Mirror One-Lung operation, copying images to the added removable recording unit and restoring the state of Mirror operation. In this configuration, when a removable recording unit in Single operation is added to the image recording/reproducing device in Mirror One-Lung operation, the Mirror operation can suitably be achieved by using the removable recording unit. While images recorded on each of the two removable recording units during Single operation are kept, images can be redundantly recorded on the two removable recording units in Mirror operation, so that backup performance can be improved.

Now, an image recording/reproducing device according to an embodiment of the invention will be described with reference to the drawings. In the following embodiment, the image recording/reproducing device is applied to a surveillance system. In the following embodiment, the removable recording unit is a removable HDD unit (hereinafter referred to as an HDD).

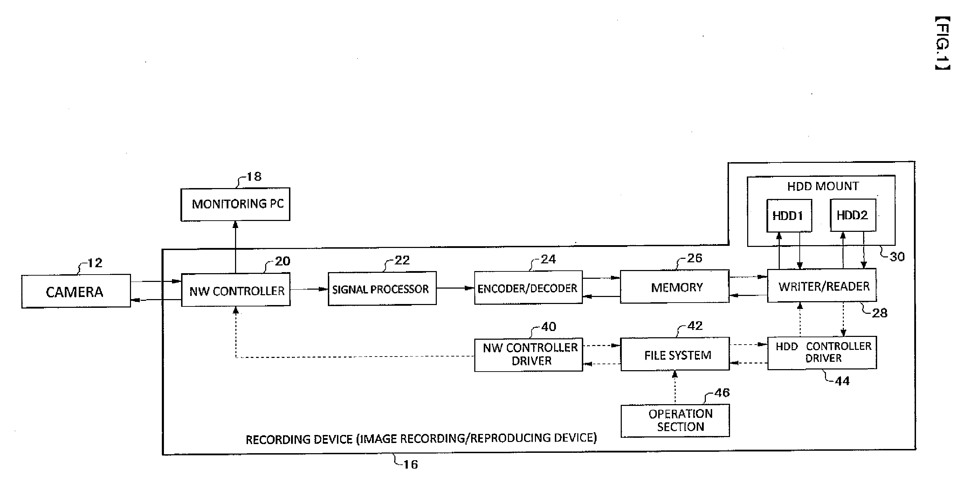

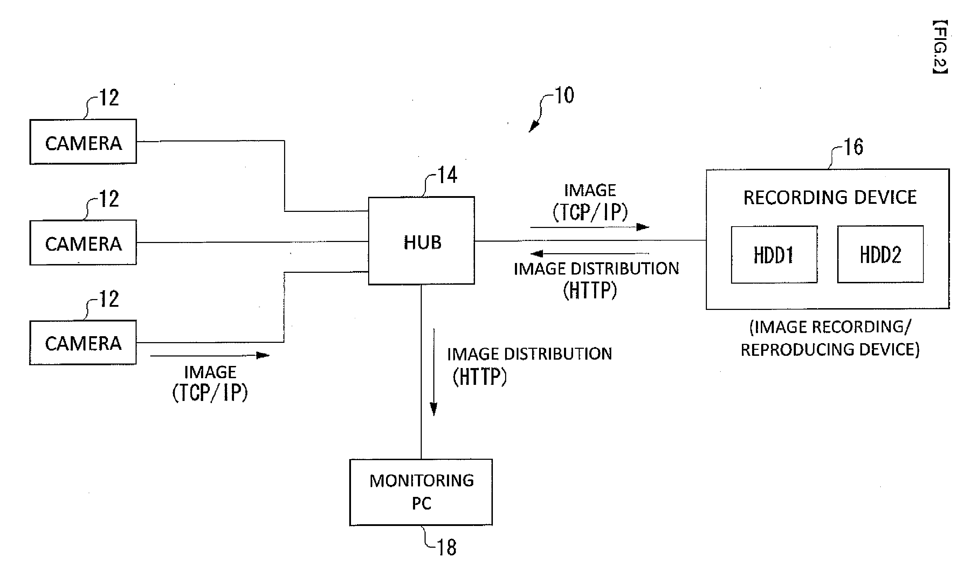

Fig. 1 shows the image recording/reproducing device according to the embodiment of the invention, and Fig. 2 shows an example of the surveillance system to which the image recording/reproducing device is applied. Referring to Fig. 2, first, the surveillance system 10 has a plurality of cameras 12. The cameras 12 are network cameras that transmit images through LAN or other networks, and are connected with a hub 14. The hub 14 is further connected with a recording device 16 that is the image recording/reproducing device, and is also connected with a monitoring PC (personal computer) 18 that is a browser.

When the camera 12 shoots a surveillance area, the surveillance image is sent to the recording device 16 by using the TCP/IP protocol, and the image is recorded at the recording device 16. When the image is reproduced on the recording device 16, the image is distributed by using the HTTP protocol and is displayed on the monitoring PC 18.

As illustrated, the recording device 16 is configured such that it can be mounted with two HDDs 1 and 2. As described above, the HDDs 1 and 2 are one example of the removable recording units, and can be mounted to and removed from the recording device 16. In the embodiment, highly shockproof 2.5-inch type HDDs are used as the HDDs 1 and 2.

Fig. 1 shows a conf iguration of the recording device (image recording apparatus) 16. In Fig. 1, an NW controller 20 controls network communications with the cameras 12 and monitoring PC 18 (browser). A signal processor 22 is a circuit for processing signals that are transmitted to and received from the network. An encoder/decoder 24 encodes and decodes transmitted and received data. A memory 26 stores transmitted and received images. The memory 26 also stores various other data that is processed in the recording device 16. A writer/reader 28 performs writing and reading processes on the HDDs 1 and 2. In the embodiment, the writer/reader 28 is configured such that it can operate independently on the two HDDs 1 and 2. An HDD mount 30 is one form of the recording unit mount, and is configured such that it can be mounted with the two HDDs 1 and 2.

The recording device 16 further comprises an NW controller driver 40, a file system 42, and an HDD controller driver 44, as a software configuration for controlling the above-described various components. These components are implemented by executing, in a CPU, software stored in the recording device 16.

In the above software configuration, the NW controller driver 40 causes the NW controller 20 to perform network communications. The HDD controller driver 44 causes the writer/reader 28 to perform writing and reading operations. The file system 42 manages the HDD configuration, records, and images of each of the HDDs 1 and 2. The file system 42 also controls the NW controller driver 40 and the HDD controller driver 44, and further controls the whole of the recording device 16.

In addition, the recording device 16 has an operation section 46. The operation section 46 may be configured with buttons or the like. Using the operation section 46, a user can input an instruction on which of Single and Mirror operations is to be performed. The Single operation is a mode in which different images are recorded on the two HDDs 1 and 2. The Mirror operation is a mode in which the same images are redundantly recorded on the two HDDs 1 and 2. In accordance with an instruction from a user, the file system 42 sets the operation status (or operational status or state) of the recording device 16 to the Single or Mirror operation. This setting is stored and kept in the memory 26. Further, the setting of the operation status is also written into and kept in the HDDs 1 and 2 in accordance with an instruction from the file system 42.

As described above, when the Single or Mirror operation is set, the setting of the operation status is stored in the memory 16 as a recording-device-side operation status (an operation status on the recording device side). Further, the setting of the operation status is written into the HDDs 1 and 2 as an HDD-side operation status (an operation status on the HDD side). The recording-device-side operation status stored in the memory 16 is herein referred to as the "device operation status." The HDD-side operation status written into the HDDs is referred to as the "HDD operation status." In short, the device operation status is an operation status set in the body of the recording device.

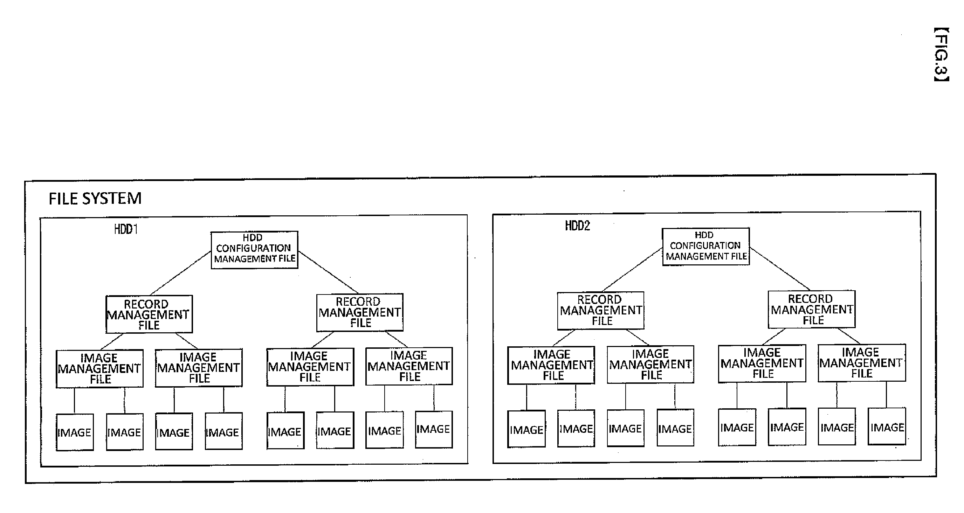

Now, Fig. 3 shows a structure of the file system 42. The file system 42 comprises HDD configuration management files, record management files, and image management files. These files are provided for each HDD. An HDD configuration management file is provided for each HDD, under which are positioned a plurality of record management files, under each of which are positioned a plurality of image management files, under each of which are positioned a plurality of images. An HDD configuration management file manages the current system configuration (the number of HDDs and the operation) and record management files. A record management file manages the relationship between records, and manages image management files. An image management file manages the positions of images.

The above is a description of the configuration of the recording device 16 that is an image recording/reproducing device according to the embodiment. An operation of the recording device 16 will be described next.

First, the overall operation of the recording device 16 will be summarized. When image data is transmitted from the camera 12, the image data goes through the NW controller 20, the signal processor 22, the encoder/decoder 24, the memory 26, and the writer/reader 28, and is recorded on the HDDs 1 and 2. If the operation status (or operational status or state) is the Single operation, different images are recorded on the HDDs 1 and 2. If the operation status is the Mirror operation, the same images are redundantly recorded on the HDDs 1 and 2. When images are reproduced, the images are read from the HDDs 1 and 2, are outputted through the memory 26, the encoder/decoder 24, the signal processor 22, and the NW controller 20 to the network, and are sent to the monitoring PC 18.

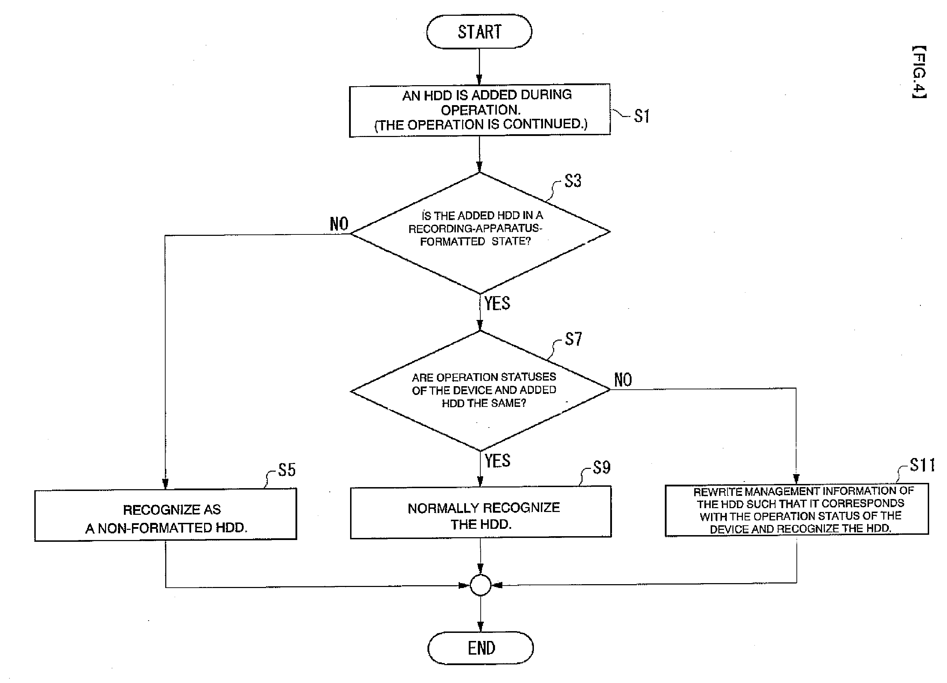

An operation in a case where an HDD is added during operation of the recording device 16 will be described next with reference to Fig. 4. Addition of an HDD means the HDD 1 or 2 being mounted to the HDD mount 30 of the recording device 16. The HDD to be added corresponds to the added removable recording unit of the invention. In the following description, an HDD to be added is referred to as an added HDD.

In Fig. 4, when an HDD is added during operation of the recording device 16, the HDD controller driver 44 recognizes that the HDD is added, and notifies the file system 42 of the addition of the HDD. The file system 42 instructs the HDD controller driver 44 to read management information of the added HDD. The HDD controller driver 44 controls the writer/reader 28 such that the instruction from the file system 42 is executed, and reads the management information from the added HDD. At this time, in order to continue the operation, the HDD controller driver 44 controls the HDDs 1 and 2 such that the HDDs 1 and 2 operate completely independently of each other. The HDD controller driver 44 notifies the file system 42 of data of the management information read from the added HDD (S1).

In the above operation, the file system 42 and the HDD controller driver 44 function as a management information acquisition section that acquires management information of an added HDD. Management information is information for managing an HDD configuration or the like, and is written in a specific area of an HDD. More specificcally, management information includes information corresponding to an HDD configuration management file and record management file used in the above-described file system 42. This management information includes information on a format status and HDD operation status (Single or Mirror) of an HDD. A format status and an operation status are included in an HDD configuration management file.

Upon receiving from the HDD controller driver 44 the management information acquired from the added HDD, the file system 42 determines whether the format of the added HDD is in an recording-device-formatted state or not with reference to an HDD configuration file included in the management information (S3). Being in a recording-device-formatted state (or being recording-device-formatted) means being in a state in which an HDD is formatted by a recording device of the same type. For example, an HDD that is formatted by another recording device of the same type is recording-device-formatted. When an HDD formatted in a previous operation is once or temporarily removed and is mounted again, the format is also in an recording-device-formatted state.

If the format of the added HDD is not in a recording-device-formatted state (No at S3), the file system 42 recognizes the added HDD as a non-formatted HDD (S5), and ends the process. A non-formatted HDD is an HDD that is not formatted. After this, if the operation section 46 is operated and formatting is instructed, the added HDD will be formatted.

If the format of the added HDD is in a recording-device-formatted state at the step S3 (Yes at S3), the file system 42 rewrites the HDD configuration management file and record management files based on the management information of the added HDD. As a result of this rewriting, an HDD is also added in the structure of the file system 42. If an added HDD is mounted during operation of one HDD, the management files are rewritten as shown in Fig. 3. Further, the file system 42 compares the device operation status (the operation status of the body of the apparatus) and the HDD operation status of the added HDD, and determines whether both statuses correspond with each other or not (S7). As previously described, the device operation status is the operation status of the recording device 16 set by operating the operation section 46. The HDD operation status is an operation status written in an HDD. As for an added HDD, the HDD operation status at the time of addition is a previous or past operation status that was written when the HDD was mounted to another recording device.

Suppose that the HDD operation status of the added HDD is the same as the device operation status in the determination of the step S7 (Yes at S7). In this case, the file system 42 does not format the added HDD, normally recognizes the added HDD with the current HDD operation status left unchanged (S9), and ends the process. Since the normal recognition is made, the recording of images on the added HDD can be started.

Suppose that the HDD operation status of the added HDD is different from the device operation status in the determination of the step S7 (No at S7). Also in this case, the file system 42 does not format the added HDD. However, the file system 42 rewrites the HDD configuration management file in the management information of the added HDD such that the HDD operation status corresponds with the device operation status (the operation status of the body), recognizes the added HDD (S11), and ends the process. Since the normal recognition is also made in this case, the recording of images on the added HDD can be started.

In the above operation, the file system 42 functions as a format determination section and an operation status determination section, and further functions as a recording unit recognition section that performs a recognition process on the added HDD in accordance with their determination results.

The above is a description, with reference to the Fig. 4, of an operation when an HDD is added to the recording device 16 that is an image recording/reproducing device. The operation of the recording device 16 will be further described next with a more specific example.

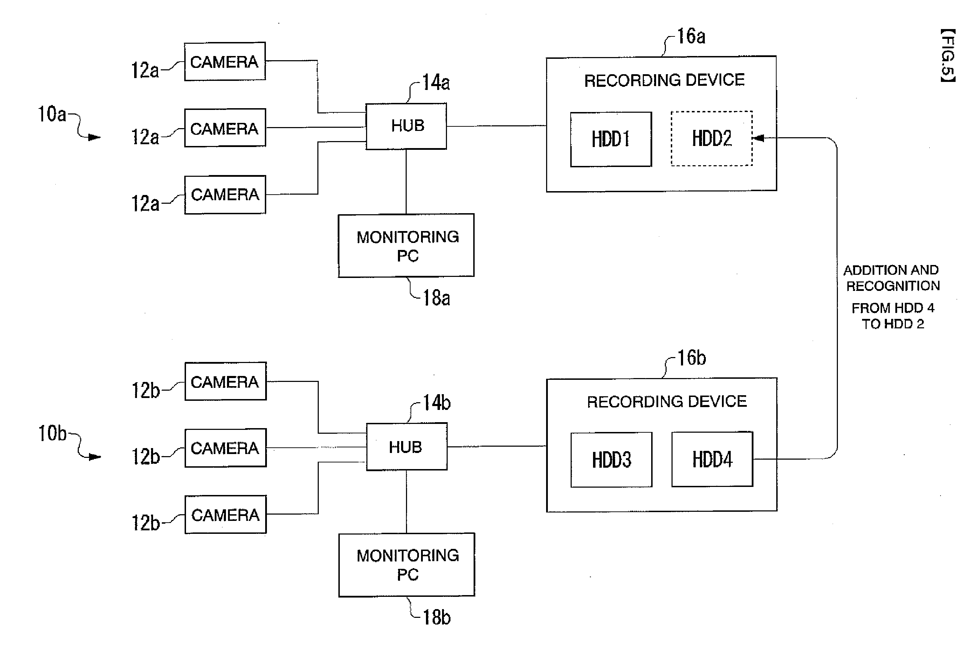

Fig. 5 shows two surveillance systems 10a and 10b as an example. A recording device 16a of the surveillance system 10a is mounted with an HDD 1. However, another HDD 2 is not yet mounted. On the other hand, in a recording device 16b of the surveillance system 10b, two HDDs 3 and 4 are mounted and being operated.

Suppose that, in the above situation, the HDD 4 is removed from the recording device 16b of the surveillance system 10b and is added to the recording device 16a of the surveillance system 10a. The HDD 4 has already been formatted and is in the formatted state. Then, in the recording device 16a, the HDD operation status of the HDD 4 is compared with the device operation status of the recording device 16a. If the HDD operation status corresponds with the device operation status, the HDD 4 will, be recognized as the HDD 2 without change, and the operation of the HDD 2 will be started. If the HDD operation status and the device operation status are different from each other, the HDD operation status will be rewritten such that it corresponds with the device operation status, the HDD 4 will be recognized as the HDD 2, and the operation of the HDD 2 will be started.

In this way, in the example of Fig. 5, the HDD 4 of the recording device 16b is moved to the recording device 16a and is operated as the HDD 2. At this time, the added HDD 2 is not reformatted. Images recorded at the recording device 16b are therefore kept in the HDD 2, and further images will be accumulated in the HDD 2 at the recording device 16a.

The embodiment is configured such that, when the above recognition operation is performed on an added HDD, the operation of already mounted another HDD is continued without change. In the example of Fig. 5, when the HDD 2 is added, the HDD 1 is already mounted and operated. In this case, the above operation of Fig. 4 on the HDD 2 is performed with no effect on the operation of HDD 1. Consequently, during operation of Fig. 4 on the HDD 2, image signals from the camera 12 are recorded on the HDD 1, and images recorded on the HDD 1 are reproduced and distributed to the monitoring PC 18 (browser). The recognition process on an added HDD is thus performed with the operation being continued.

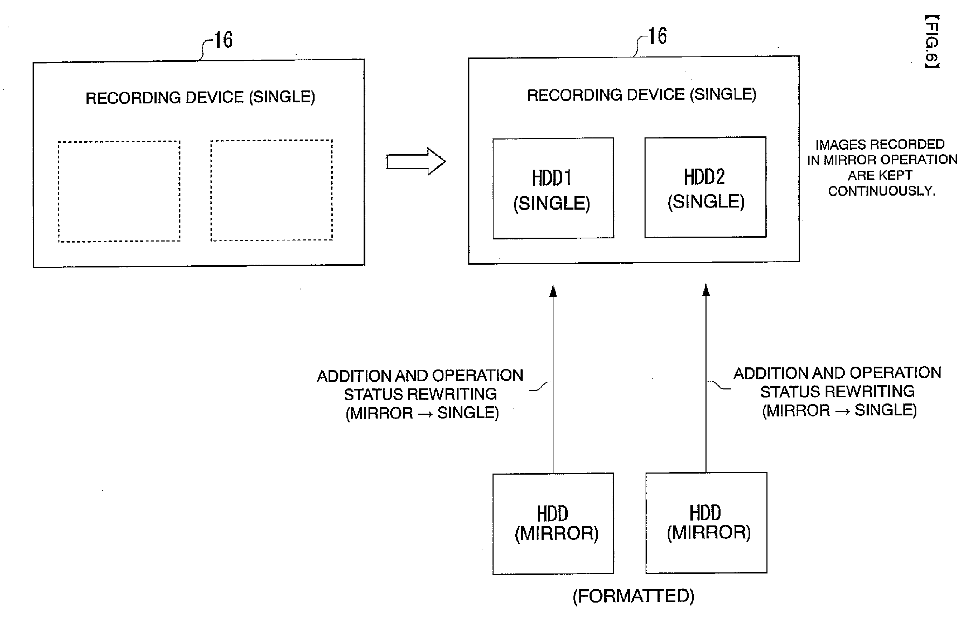

Fig. 6 shows another example of the operation of the apparatus. In the following examples, the recording device 16 and added HDDs are illustrated, and other components of the surveillance system are omitted from the drawings. In the example of Fig. 6, the recording device 16 is in a non-mounted state and is mounted with no HDD (the number of HDDs is zero) at first. The device operation status is set to the Single operation. Then, two HDDs are added. Suppose that the two HDDs have been formatted and are in the formatted state and their HDD operation status is the Mirror operation. In this case, the HDD operation status of the two HDDs is rewritten from the Mirror operation to the Single operation, and the HDDs are recognized. If images have already been recorded previously during Mirror operation at another recording device, new images will be recorded in Single operation, while the images recorded during Mirror operation are kept.

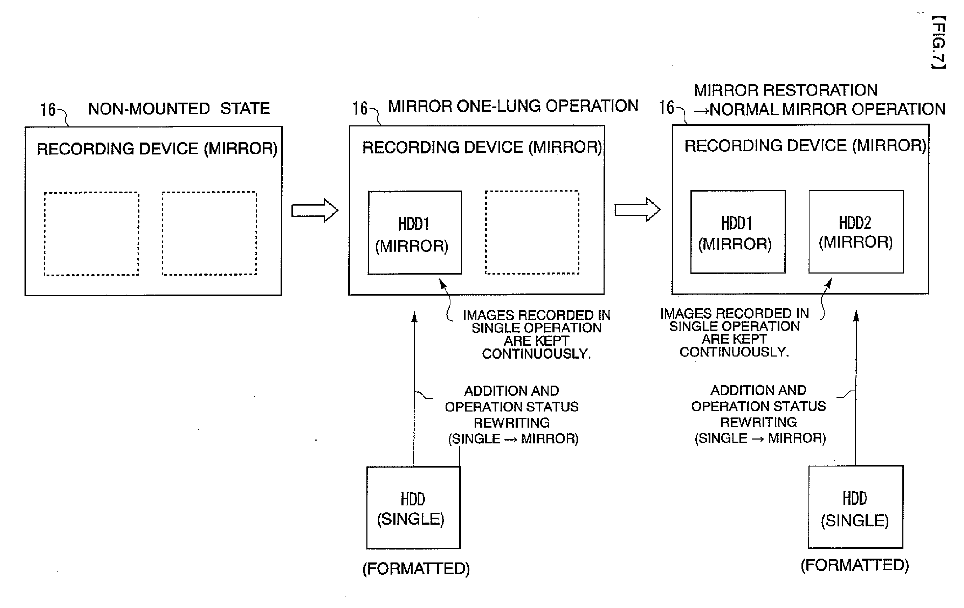

Fig. 7 shows still another example of the operation of the apparatus. In the example of Fig. 7, the recording device 16 is in a non-mounted state and is mounted with no HDD at first. The device operation status is set to the Mirror operation.

Now, suppose that one HDD that has been formatted and is in the formatted state and in the Single operation is added. In this case, the operation status of the added HDD is rewritten from the Single operation to the Mirror operation, the added HDD is recognized, and the Mirror One-Lung operation using the added HDD is performed. Mirror One-Lung operation (which may also be referred to as Mirror One-Side operation) is performed when only one HDD is mounted despite the operation status being set to the Mirror operation, and images are recorded on the one mounted HDD. At this time, images previously recorded during Single operation at another recording device are kept.

After that, as shown in Fig. 7, when still another HDD that has been formatted and is in the formatted state and in Single operation is added, the HDD operation status of this added HDD is also rewritten to the Mirror operation. Then, the added HDD is recognized as an HDD for Mirror restoration, and the Mirror restoration is performed. In Mirror restoration, images recorded on the first HDD during Mirror One-Lung operation are copied to the latter HDD. At this time, images recorded during Single operation and left in the latter HDD are kept.

In this way, in the example of Fig. 7, while images recorded on each of the two HDDs during Single operation are kept, images can be redundantly recorded on the two HDDs in Mirror operation, so that backup performance can be improved.

There has been described an image recording/reproducing device according to an embodiment of the invention. In the embodiment, the file system 42 functions as the device-operation-status setting section, management information acquisition section, format determination section, operation status determination section, and recording unit recognition section of the invention. When a removable recording unit (an HDD in the above embodiment) is added, the recording device 16 determines a format status and unit operation status (an HDD operation status in the above embodiment) of the added removable recording unit. If the added removable recording unit is in the recording-device-formatted state and its unit operation status corresponds with the device operation status, the recording device 16 recognizes the added removable recording unit with the current unit operation status left unchanged. If the added removable recording unit is in the recording-device-formatted state and its unit operation status is different from the device operation status, the recording device 16 rewrites the unit operation status such that it corresponds or coincides with the device operation status, and recognizes the added removable recording unit. Consequently, a removable recording unit in the recording-device-formatted state can be used without being reformatted, and this allows the unit to be used continuously with previously recorded images kept. Even if the unit operation status and the device operation status are different from each other, the removable recording unit can be used after the unit operation status is rewritten, and this allows the removable recording unit to be used continuously with images recorded in previous operation status kept. In this way, continuous use of a removable recording unit can be achieved, improving convenience.

In the embodiment, as shown in Fig. 7, in a case where the device operation status is the Mirror operation and the recording unit mount is in a non-mounted state and when one removable recording unit which is in the recording-device-formatted state and whose unit operation status is the Single operation is mounted, the recording device 16 rewrites the unit operation status of the added removable recording unit to the Mirror operation, and then performs the Mirror One-Lung operation (Mirror One-Side operation). This allows further images to be recorded on the added removable recording unit while images recorded on the removable recording unit during Single operation are kept. Such image recording can be achieved by the Mirror One-Lung operation even when the normal Mirror operation cannot be performed due to insufficient number of removable recording units.

In the embodiment, when another removable recording unit whic is in the recording-device-formatted state and whose unit operation status is the Single operation is mounted, the recording device 16 rewrites the unit operation status of the added removable recording unit to the Mirror operation, switches the operation from the Mirror One-Lung operation to the Mirror operation, and performs Mirror restoration. Consequently, while images recorded on each of the two removable recording units during Single operation are kept, images can be redundantly recorded on the two removable recording units in Mirror operation, so that backup performance can be improved.

While there has been described what is at present considered to be a preferred embodiment of the invention, it will be understood that various modifications and variations may be made thereto, and it is intended that appended claims cover all such modifications and variations as fall within the true spirit and scope of the invention.

### Industrial applicability

As above, the image recording/reproducing device according to the invention has an advantage in being able to continuously use a mounted removable recording unit and improving convenience, and is useful as an image recording/reproducing device of a surveillance camera system, or the like.

## Claims

1. An image recording/reproducing device comprising:
a recording unit mount for mounting a plurality of removable recording units for recording an image;
a device-operation-status setting section for setting a device operation status which is an operation status on the recording device side about which of a Single operation and a Mirror operation is to be applied to the plurality of removable recording units;
a management information acquisition section for, when the removable recording unit is added to the recording unit mount, acquiring management information for managing a recording unit configuration from the added removable recording unit;
a format determination section for determining whether the added removable recording unit is in a recording-device-formatted state or not with reference to format status information included in the management information;
an operation status determination section for determining whether a unit operation status which is an operation status set in the added removable recording unit corresponds with the device operation status or not with reference to operation status information included in the management information; and
a recording unit recognition section for performing a recognition process on the added removable recording unit in accordance with determination results from the format determination section and the operation status determination section,
wherein the recording unit recognition section recognizes the added removable recording unit which is in the recording-device-formattied state and whose unit operation status corresponds with the device operation status, with the current unit operation status; and recognizes the added removable recording unit which is in the recording-device-formatted statte and whose unit operation status is different from the device operation status, with the unit operation status rewritten such that the unit operation status corresponds with the device operation status.

2. The image recording/reproducing device according to claim 1, wherein in a case where the device operation status is the Mirror operation and the recording unit mount is in a non-mounted state and when one removable recording unit which is in the recording-device-formatted state and whose unit operation status is the Single operation is mounted, the unit operation status of the added removable recording unit is rewritten to the Mirror operation, and then a Mirror One-Lung operation is performed.

3. The image recording/reproducing device according to claim 2, wherein when another removable recording unit which is in the recording-device-formatted state and whose unit operation status is the Single operation is mounted, the unit operation status of the added removable recording unit is rewritten to the Mirror operation, the operation is switched from the Mirror One-Lung operation to the Mirror operation, and Mirror restoration is performed.

4. A control method for an image recording/reproducing device having a recording unit mount for mounting a plurality of removable recording units for recording an image, the control method comprising:
setting a device operation status which is an operation status on the recording device side about which of a Single operation and a Mirror operation is to be applied to the plurality of removable recording units;
acquiring, when the removable recording unit is added to the recording unit mount, management information for managing a recording unit configuration from the added removable recording unit;
determining whether the added removable recording unit is in a recording-device-formatted state or not or not with reference to format status information included in the management information;
determining whether a unit operation status which is an operation status set in the added removable recording unit corresponds with the device operation status or not with reference to operation status information included in the management information; and
performing a recognition process on the added removable recording unit in accordance with determination results on the format status and the operation status,
wherein the recognition process recognizes the added removable recording unit which is in the recording-device-formatted state and whose unit operation status corresponds with the device operation status, with the current unit operation status; and recognizes the added removable recording unit which is in the recording-device-formatted state and whose unit operation status is different from the device operation status, with the unit operation status rewritten such that the unit operation status corresponds with the device operation status.

5. A control program executed in an image recording/reproducing device having a recording unit mount for mounting a plurality of removable recording units for recording an image, the control program causing the image recording/reproducing device to execute the processes of:
setting a device operation status which is an operation status on the recording device side about which of a Single operation and a Mirror operation is to be applied to the plurality of removable recording units;
acquiring, when the removable recording unit is added to the recording unit mount, management information for managing a recording unit configuration from the added removable recording unit;
determining whether the added removable recording unit is in a recording-device-formatted state or not with reference to format status information included in the management information;
determining whether a unit operation status which is an operation status set in the added removable recording unit corresponds with the device operation status or not with reference to operation status information included in the management information; and
performing a recognition process on the added removable recording unit in accordance with determination results on the format status and the operation status,
wherein the recognition process recognizes the added removable recording unit which is in the recording-device-formatted state and whose unit operation status corresponds with the device operation status, with the current unit operation status; and recognizes the added removable recording unit which is in the recording-device-formatted state and whose unit operation status is different from the device operation status, with the unit operation status rewritten such that the unit operation status corresponds with the device operation status.
